# FASCICULE DE BREVET EUROPEEN

(11) **EP 4 149 739 B1**
(45) Date de publication et mention de la délivrance du brevet: **09.09.2026**
(21) Numéro de dépôt: 21724340.1
(22) Date de dépôt: 14.05.2021
(51) Int. Cl.: B29C 64/118, B29C 64/232, B29C 64/236, B29C 64/40, B33Y 10/00, B33Y 30/00

(54) **PROCÉDÉ DE FABRICATION ADDITIVE EN MILIEU CONTRAINT AJUSTABLE**
VERFAHREN ZUR GENERATIVEN FERTIGUNG IN EINEM EINSTELLBAREN EINGESCHRÄNKTEN MEDIUM
METHOD FOR ADDITIVE MANUFACTURING IN AN ADJUSTABLE CONSTRAINED MEDIUM

(30) Priorité: 15.05.2020 FR 2004883
(43) Date de publication de la demande: 22.03.2023
(73) Titulaire: Centre National de la Recherche Scientifique, 75016 Paris 16 (FR); Université Claude Bernard Lyon 1, 69100 Villeurbanne (FR); Institut National des Sciences Appliquées de Lyon (Insa Lyon), 69100 Villeurbanne (FR); Ecole Sup Chimie Phys Electroniq Lyon, 69616 Villeurbanne cedex (FR)
(72) Inventeur: COURTIAL, Edwin-Joffrey, 69100 VILLEURBANNE (FR); MARQUETTE, Christophe, 69100 VILLEURBANNE (FR); COLLY, Arthur, 69100 VILLEURBANNE (FR); BARTHES, Julien, 67100 STRASBOURG (FR)
(74) Mandataire: INNOV-GROUP
(86) Numéro de dépôt international: PCT/EP2021/062808
(87) Numéro de publication internationale: WO 2021/229046

(56) Documents cités:
- EP-A1- 3 616 865
- WO-A1-2012/111655
- WO-A1-2017/081040
- US-A1- 2008 145 639

## Description

### DOMAINE TECHNIQUE

L'invention concerne le domaine de la fabrication additive, également dénommée « impression tridimensionnelle » ou « impression 3D ». L'invention concerne plus particulièrement la fabrication additive au sein d'un milieu contraint.

### ART ANTÉRIEUR

Parmi les procédés de fabrication additive connus, certains procédés se distinguent en mettant en œuvre un dépôt de matériau et sa mise en forme au sein d'un bac d'impression contenant un milieu contraint qui remplit une fonction de maintien du matériau imprimé. Dans ces procédés, le dépôt de matériau imprimé, destiné à former un objet tridimensionnel, est réalisé par une tête d'impression mobile selon les trois dimensions de l'espace et dont la buse est plongée dans un milieu contraint formé d'un matériau qui entoure et contient l'objet tridimensionnel en cours de formation.

Le document EP 3 616 865 A1 décrit un tel procédé de fabrication additive mettant en œuvre un milieu contraint. Selon ce procédé, une encre à base de silicone est déposée à l'état liquide dans un milieu contraint constitué d'un gel. La tension superficielle d'interface entre le silicone et le gel est propice à l'impression de l'encre à base de silicone avec le gel comme phase suspendante, ce qui permet l'impression de pièces en silicone.

Par ailleurs, la demande de brevet WO2020109745 décrit également un tel procédé de fabrication additive dans lequel un matériau d'impression est déposé au sein d'une phase granulaire agissant comme milieu contraint.

Ces procédés permettent de fabriquer des pièces à partir d'un matériau d'impression dont les propriétés d'écoulement ne sont pas ou insuffisamment adaptées aux procédés de fabrication additive classiques. Par exemple, ces procédés acceptent comme matériau d'impression des silicones très fluides qui sont non imprimables avec les procédés classiques, tels que les procédés par dépôt de fil en fusion (FDM, pour « Fused deposition modeling », en anglais), de liquides viscoélastiques (LDM, pour « Liquid deposition modeling », en anglais), des procédés par modelage à jets multiples (MJP pour « Multi Jet Printing », en anglais), la stéréolithographie (SLA, « Stereolithography Apparatus », en anglais), la fusion sélective par laser (SLM, « Selective Laser Melting » en anglais), le frittage sélectif par laser (SLS, « Selective Laser Sintering », en anglais), la fusion par faisceau d'électrons (EBM, « Electron Beam Melting »), les procédés par projection de liant sur poudre (« Binder jetting », en anglais), ces procédés étant tous fondamentalement différents des procédés de fabrication additive en milieu contraint.

### EXPOSÉ DE L'INVENTION

L'invention a pour but d'améliorer les procédés et les dispositifs de fabrication additive de l'art antérieur.

A cet effet, l'invention, telle que définit dans la revendication 1, vise un procédé de fabrication additive incluant le dépôt d'un matériau d'impression en suspension au sein d'un bac d'impression contenant un milieu contraint, pour former un objet tridimensionnel, ce dépôt de matériau d'impression étant réalisé par au moins une étape d'injection du matériau d'impression par une buse de tête d'impression plongée dans le milieu contraint et mobile au sein du milieu contraint selon les trois dimensions de l'espace. Ce procédé comporte au moins une étape de modification du niveau du milieu contraint dans le bac d'impression.

Selon un autre objet, l'invention telle que définit dans la revendication 11 vise un dispositif de fabrication additive comportant :
- un milieu contraint disposé dans un bac d'impression ;
- une tête d'impression adaptée à délivrer un matériau d'impression, cette tête d'impression comportant une buse adaptée à être déplacée au sein du milieu contraint selon les trois dimensions de l'espace ;
- un dispositif de modification du niveau du milieu contraint du bac d'impression.

Le procédé et le dispositif selon l'invention permettent tout d'abord des impressions 3D de meilleure qualité en adaptant la force de compression subie par la buse lors de l'impression.

De plus, un tel procédé ouvre de nouvelles perspectives aux procédés de fabrication additive en milieu contraint. Ces procédés de fabrication additive en milieu contraint permettent ainsi, non seulement d'imprimer des pièces à partir de matériaux d'impression difficiles (par exemple des matériaux de faible viscosité, de contrainte seuil insuffisante, ou présentant un comportement thixotrope notable), mais permettent de plus de moduler des caractéristiques physiques de la pièce imprimée.

Dans la présente description et les revendications, le terme « impression » est employé pour désigner la réalisation d'une pièce par un procédé de fabrication additive, l'expression « matériau imprimé » désigne le matériau qui est mis en forme au cours de ce procédé et qui constitue tout ou partie de la pièce fabriquée, et l'expression « matériau contraignant » désigne le matériau présent dans le bac d'impression, qui constitue le milieu contraint, et qui est donc destiné à entourer et exercer une pression sur la pièce réalisée dans le matériau d'impression.

Un tel procédé de fabrication additive permet d'agir non seulement sur les formes de la pièce obtenue, par le pilotage de la tête d'impression, mais également sur certaines propriétés physiques de la pièce, par le pilotage du niveau du milieu contraint.

Pour différentes pièces imprimées à partir d'un modèle tridimensionnel identique, différents paramétrages relatifs notamment à la variation du niveau du milieu contraint dans le bac d'impression aboutiront à des pièces de même forme mais présentant des propriétés physiques différentes.

Il est ainsi possible, à partir du même matériau d'impression, d'obtenir des pièces présentant par exemple des caractéristiques mécaniques différentes, simplement par un paramétrage du procédé. Un dispositif de fabrication additive mettant en œuvre un tel procédé pourra donc par exemple être alimenté avec une seule source de matériau d'impression et l'utilisateur pourra choisir entre différentes propriétés physiques souhaitées pour la pièce finale, et ces propriétés physiques seront appliquées uniquement par paramétrage de la machine, sans modifier l'approvisionnement en matériau d'impression. Les propriétés mécaniques d'une pièce sont un exemple de propriétés physiques que l'on peut moduler grâce au procédé.

Différentes pièces peuvent ainsi être obtenues avec, par exemple, des caractéristiques mécaniques différentes, à partir du même matériau d'impression. Alternativement, une même pièce peut être obtenue avec différentes caractéristiques mécaniques en son sein. Le procédé permet en effet de faire varier les caractéristiques mécaniques d'une portion de pièce, en pilotant le niveau du milieu contraint de sorte que la pièce finale, bien que constituée d'un même matériau d'impression, présente des portions présentant différentes caractéristiques locales adaptées à l'usage de la pièce.

Sur un autre registre, comme exemple de propriétés physiques modulables grâce au procédé, le procédé permet au contraire d'obtenir des pièces très homogènes du point de vue des propriétés mécaniques, en pilotant dans ce cas le niveau du milieu contraint pour garantir que toutes les portions de la pièce ont précisément les mêmes propriétés mécaniques.

Le procédé selon l'invention peut comporter les caractéristiques additionnelles suivantes, seules ou en combinaison :
- le procédé comporte une étape d'ajustement de la contrainte exercée par le milieu contraint sur le matériau d'impression ;
- au cours d'une étape de modification du niveau du milieu contraint dans le bac d'impression, une couche de matériau contraignant identique au matériau constituant le milieu contraint dans le bac d'impression est déposée à la surface du milieu contraint ;
- au cours d'une étape de modification du niveau du milieu contraint dans le bac d'impression, une couche de matériau contraignant différent du matériau constituant le milieu contraint dans le bac d'impression est déposée à la surface du milieu contraint ;

- le dépôt d'une couche de matériau contraignant sur le milieu contraint est réalisé par diffusion sur toute la surface du milieu contraint ;
- le dépôt d'une couche de matériau contraignant sur le milieu contraint est réalisé par une tête de diffusion mobile ;
- durant une étape de modification du niveau du milieu contraint dans le bac d'impression, un support de têtes portant la tête d'impression et la tête de diffusion est déplacé en vis-à-vis de toute la surface du milieu contraint, la tête d'impression étant désactivée et la tête de diffusion étant activée ;
- au cours d'une étape de modification du niveau du milieu contraint dans le bac d'impression, une couche de matériau du milieu contraint est extraite du bac d'impression ;
- l'extraction d'une couche de matériau du milieu contraint est réalisée par aspiration sur toute la surface du milieu contraint ;
- l'aspiration est réalisée par une tête de retrait mobile ;
- durant une étape de modification du niveau du milieu contraint dans le bac d'impression, un support de têtes portant la tête d'impression et la tête de retrait est déplacé en vis-à-vis de toute la surface du milieu contraint, la tête d'impression étant désactivée et la tête de retrait étant activée ;
- le procédé comporte successivement : une étape d'impression d'une portion de l'objet tridimensionnel ; une étape de variation du niveau du milieu contraint dans le bac d'impression ; une étape d'impression d'une autre portion de l'objet tridimensionnel ;
- le procédé comporte : une étape préliminaire de calibrage dans laquelle est déterminée la relation entre une caractéristique physique prédéterminée et la profondeur d'impression dans le milieu contraint ; une étape de sélection de profondeurs d'impression correspondant à des valeurs prédéterminées pour ladite caractéristique physique ; des étapes d'impression d'une pièce dans le milieu contraint, à des niveaux du milieu contraint correspondant aux profondeurs d'impression sélectionnées.
- le milieu contraint présente une propriété d'écoulement ;
- le milieu contraint est constitué d'un matériau contraint granulaire ;
- le milieu contraint est constitué d'un gel ;
- le matériau d'impression est un matériau durcissable.

Le dispositif selon l'invention peut comporter les caractéristiques additionnelles suivantes, seules ou en combinaison :
- une tête de diffusion mobile adaptée au dépôt d'une couche de matériau contraignant sur le milieu contraint ;
- la tête de diffusion comporte des moyens de distribution contrôlée de matériau contraignant ;
- un support de têtes portant la tête d'impression et la tête de diffusion, le support de tête étant déplaçable en vis-à-vis de toute la surface du milieu contraint selon un mode où la tête d'impression est désactivée et la tête de diffusion est activée ;
- un réservoir de matériau contraignant contenant un matériau identique au matériau constituant le milieu contraint dans le bac d'impression, ce réservoir alimentant la tête de diffusion ;
- un réservoir de matériau contraignant contenant un matériau différent du matériau constituant le milieu contraint dans le bac d'impression, ce réservoir alimentant la tête de diffusion ;
- une tête de retrait mobile adaptée au retrait d'une couche de matériau du milieu contraint ;
- la tête de retrait est associée à des moyens d'aspiration ;
- un support de têtes portant la tête d'impression et la tête de retrait, le support de têtes étant déplaçable en vis-à-vis de toute la surface du milieu contraint selon un mode où la tête d'impression est désactivée et la tête de retrait est activée ;
- un réservoir de matériau contraignant, la tête de retrait alimentant ce réservoir ;
- le milieu contraint dans le bac d'impression présente une propriété d'écoulement ;
- le milieu contraint dans le bac d'impression est constitué d'un matériau contraint granulaire ;
- le milieu contraint dans le bac d'impression est constitué d'un gel.

### PRÉSENTATION DES FIGURES

D'autres caractéristiques et avantages de l'invention ressortiront de la description non limitative qui suit, en référence aux dessins annexés dans lesquels :
- La figure 1 illustre un dispositif de fabrication additive selon l'invention ;
- La figure 2 illustre une étape de l'impression d'une première pièce avec le dispositif de la figure 1 ;
- La figure 3 illustre une autre étape de l'impression d'une première pièce avec le dispositif de la figure 1 ;
- La figure 4 illustre une autre étape de l'impression d'une première pièce avec le dispositif de la figure 1 ;
- La figure 5 illustre une étape de l'impression d'une deuxième pièce avec le dispositif de la figure 1 ;
- La figure 6 illustre une autre étape de l'impression d'une deuxième pièce avec le dispositif de la figure 1 ;
- La figure 7 illustre une autre étape de l'impression d'une deuxième pièce avec le dispositif de la figure 1 ;
- La figure 8 est un graphique illustrant la relation entre l'élasticité d'une pièce imprimée, la profondeur d'impression, et le matériau contraignant ;
- La figure 9 illustre une sphère obtenue avec le dispositif de la figure 1 ;
- La figure 10 illustre le détail des moyens dont dispose le dispositif de la figure 1 pour faire varier le niveau du milieu contraint ;
- La figure 11 illustre une variante des moyens de la figure 10.

### DESCRIPTION DÉTAILLÉE

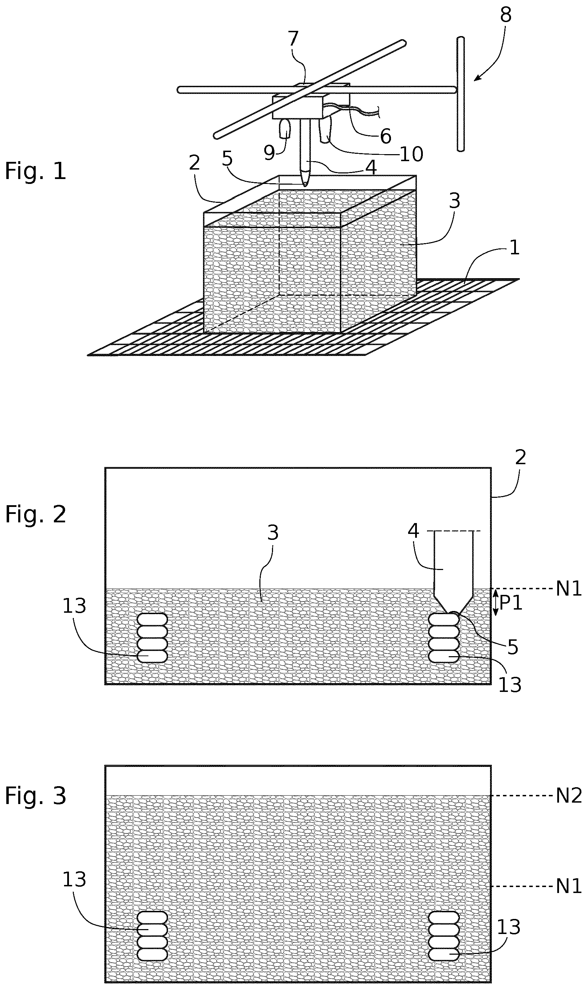

La figure 1 illustre un dispositif de fabrication additive selon l'invention. Ce dispositif comporte un plateau d'impression 1 sur lequel est disposé un bac d'impression 2 contentant un milieu contraint 3. En pratique, le plateau d'impression 1 peut être par exemple un plateau en aluminium d'un mètre carré comme celui de l'imprimante 3D commercialisée par la société TOBECA sous la référence 101015. Le bac d'impression 2 peut être par exemple une boîte plastique dite multi box commercialisée par LEROY-MERLIN sous la référence 68993750. Le dispositif comporte également une tête d'impression 4 munie d'une buse 5. Le terme « buse » désigne précisément la sortie permettant de délivrer le matériau d'impression. La buse 5 et une partie de la tête d'impression 4 sont plongées, durant toute la durée de l'impression d'une pièce, dans le milieu contraint et sont déplacées au sein de ce milieu contraint suivant des mouvements permettant le dépôt du matériau d'impression. La tête d'impression 4 est alimentée en matériau d'impression par un dispositif d'alimentation 6 schématisé ici simplement par un tuyau d'alimentation. Le dispositif d'alimentation peut être tout moyen connu utilisé dans l'impression 3D, tel qu'un circuit avec pompe ou dispositif à pression fournissant le matériau d'impression sous forme liquide, un distributeur mécanique fournissant le matériau d'impression sous forme de fil continu ou de granules pour être mis en fusion dans la tête d'impression 4, etc. Quel que soit le dispositif d'alimentation 6 utilisé, la tête d'impression 4 est adaptée à délivrer par sa buse 5 le matériau d'impression sous forme suffisamment fluide pour être imprimé. La tête d'impression 4 peut-être par exemple celle commercialisée par la société VISCOTEC sous la référence vipro-HEAD3 et la buse 5 peut être par exemple une aiguille de dépose de la marque Optimum commercialisée par la société Nordson EFD.

Le matériau d'impression est un matériau durcissable, c'est-à-dire qu'il se solidifie après avoir été déposé au sein du milieu contraint. Le matériau d'impression peut être par exemple un matériau en fusion délivré par une tête d'impression chauffante, ce matériau se solidifiant en refroidissant, ou un polymère réticulable suite à une réaction chimique, l'évaporation d'un solvant, ou par l'exposition à un rayonnement tel qu'une lumière UV. Par exemple, le matériau d'impression peut-être un silicone monocomposant (polycondensation) ou bicomposant (polyadditition).

Le dispositif d'impression comporte des moyens permettant le déplacement relatif, dans les trois directions de l'espace, entre la buse 5 et le bac 2. Dans le présent exemple, la tête d'impression 4 est montée sur un support de têtes 7 associé à des glissières 8 permettant le déplacement du support de têtes 7 selon trois translations orthogonales. En variante, tout autre dispositif mettant en mouvement le plateau d'impression 1 et/ou le support de têtes 7, par translations et/ou rotations peut être prévu en variante sous réserve qu'il permette la mobilité de la buse 5 au sein du milieu contraint 3, dans les trois directions de l'espace. Notamment, la tête d'impression 4 peut être déplacée par exemple par un bras robotique à six axes permettant d'orienter angulairement la buse au sein du milieu contraint.

Le milieu contraint 3 présente des propriétés d'écoulement, c'est-à-dire que le milieu contraint 3 est constitué d'un matériau qui épouse la forme du récipient dans lequel il est placé. Il s'agit par exemple d'un milieu granulaire, d'un milieu liquide ou gélifié, ou d'une mousse. Dans le présent exemple, le milieu contraint 3 est un milieu contraint granulaire qui est constitué d'une phase granulaire solide ainsi que d'une phase interstitielle gazeuse. La phase granulaire est un amas d'éléments solides discrets. Cet amas, par son caractère pulvérisé et non cohésif, épouse la forme du bac 2 grâce à l'agencement spontané de ces éléments discrets qui prennent appui les uns sur les autres sous l'effet de leur propre poids. Les éléments discrets interagissent les uns avec les autres en s'appuyant sur les zones de contacts que chaque élément discret présente avec les éléments discrets qui l'entourent. Le milieu contraint granulaire comporte ces éléments discrets ainsi que, entre les éléments discrets, la phase interstitielle gazeuse. Le comportement mécanique du milieu contraint granulaire n'est dû qu'à la modification des contacts entre les éléments discrets, sans influence de la phase interstitielle gazeuse, cette dernière ne participant au comportement mécanique du milieu contraint granulaire que dans la mesure où elle permet la modification des zones de contact entre éléments discrets.

En variante, l'invention peut être mise en œuvre avec tout autre milieu contraint tel qu'un gel. L'avantage du milieu contraint granulaire sur le gel est qu'il n'est pas soumis à la poussée d'Archimède, permettant de ne pas altérer les dimensions géométriques de l'objet en cours d'impression, et jusqu'à son retrait du milieu contraint.

Il en découle que le milieu contraint 3, qu'il soit granulaire ou non, peut être constitué de nombreux types de matériaux parmi lesquels : de la silice, des cénosphères, du PMMA, du bicarbonate de soude, du sucre, du sable, du Pluronic F127 (gel), du carbopol, de la gélatine, etc. tant qu'il présente des propriétés d'écoulement. Ces différents matériaux peuvent être également être mélangés en diverses proportions.Le dispositif d'impression comporte de plus une tête de diffusion 9 ainsi qu'une tête de retrait 10, adaptées toutes deux à agir sur le niveau du milieu contraint.

La tête de diffusion 9 est adaptée à déverser dans le bac 2 un matériau contraignant permettant l'augmentation du niveau du milieu contraint 3. Dans le présent exemple où le milieu contraint 3 est un milieu contraint granulaire formé par exemple par des particules solides de polymère, la tête de diffusion 9 est adaptée à diffuser une quantité suffisante de ces particules de polymère à la surface du milieu contraint 3. Le support de têtes 7 est alors pilotée pour déplacer la tête de diffusion 9 dans ce but. La tête de diffusion 9 comporte un mécanisme d'arrêt et de démarrage de la diffusion, ainsi qu'un mécanisme d'alimentation en particules de polymère (non représenté).

La tête de retrait 10 agit à l'inverse de la tête de diffusion 9 en permettant le retrait des particules de polymère à la surface du milieu contraint 3. Dans le présent exemple, la tête de retrait 10 est reliée à des moyens d'aspiration (non représentés), ou tout moyen approprié permettant un prélèvement des particules de polymère présentes à la surface du milieu contraint 3, le support de têtes 7 étant alors piloté pour déplacer la tête de retrait 10 sur toute la surface du milieu contraint 3.

Le dispositif de fabrication additive comporte notamment trois modes de fonctionnement qui sont mis en œuvre de manière combinée durant l'impression 3D d'une pièce :
- un mode d'impression dans lequel le support de têtes 7 est piloté pour plonger la buse 5 dans le milieu contraint 3 et dans lequel le mouvement du support de têtes 7 est piloté de sorte que les différentes couches de matériau d'impression soient successivement disposées les unes sur les autres, au sein du milieu contraint 3, de manière à former la pièce à imprimer. Durant ce mode d'impression, la tête de diffusion 9 et la tête de retrait 10 sont inactives. En variante, la tête de diffusion 9 et/ou la tête de retrait 10 peuvent être activées durant le mode d'impression pour permettre l'ajout ou le retrait de particules de polymère dans le milieu contraignant, simultanément à l'impression ;
- un mode de diffusion, dans lequel le support de têtes 7 est piloté pour balayer toute la surface du milieu contraint 3 afin que des particules de polymère délivrées par la tête de diffusion 9 soient régulièrement dispersées sur la surface du milieu contraint 3 de sorte que le niveau du milieu contraint 3 dans le bac 2 augmente, c'est-à-dire que la hauteur de la superficie du milieu contraint 3 augmente. Dans ce mode, la tête de retrait 10 est inactive de même que la tête d'impression 4, c'est-à-dire qu'aucun matériau d'impression n'est délivré par sa buse 5 ;
- un mode de retrait dans lequel la tête d'impression 4 et la tête de diffusion 9 sont inactives tandis que la tête de retrait 10 est activée et le support de têtes 7 balaye la surface du milieu contraint 3 de sorte à aspirer régulièrement une couche de particules de polymère, ce qui entraine une réduction du niveau du milieu contraint 3 dans le bac 2.

Les figures 2 à 4 illustrent une séquence de fonctionnement du dispositif d'impression 3D dans laquelle une pièce 11 tridimensionnelle est produite. Dans cet exemple simplifié, les épaisseurs ont été exagérées, et la pièce tridimensionnelle 11 imprimée a un profil en forme de portique, qui est impossible à réaliser par impression 3D de silicone fluide sans milieu contraint. Même les procédés dans lesquels un silicone fluide est déposé au sein d'un milieu contraint constitué d'un gel ne permettent pas un tel résultat, compte tenu de la poussée d'Archimède exercée par le gel, et qui aurait tendance à soulever la partie centrale 12 qui relie les deux montants latéraux 13, ou qui au contraire ne permettrait pas un soutien suffisant du silicone imprimé et qui entrainerait donc un affaissement de cette partie centrale 12, ou qui ne parviendrait pas à connecter avec précision la partie centrale 12 aux deux montants latéraux 13. Le milieu contraint 3, réalisé ici par un milieu contraint granulaire, permet de réaliser cette pièce par impression 3D en imprimant tout d'abord les montants latéraux 13, puis en les rejoignant par la partie centrale 12 prenant appui sur le milieu contraint 3.

La figure 2 illustre une première étape de dépôt des couches successives permettant l'impression des montants latéraux 13, le dispositif étant en mode d'impression. Durant cette étape, le niveau du milieu contraint 3 dans le bac 2 est situé à une valeur N1 correspondant à une profondeur d'impression P1. La profondeur d'impression est la hauteur du milieu contraint 3 situé au-dessus de la buse 5. Dans cet exemple, on simplifie cette notion en illustrant la profondeur d'impression qui s'étend entre le haut des montants latéraux et la surface du milieu contraint 3. Cette profondeur P1 est ici prédéterminée et calibrée compte tenu de la force de compression souhaitée pour l'impression des montants latéraux 13.

Dans une étape suivante, illustrée à la figure 3, le dispositif passe en mode de diffusion. La tête de diffusion 9 déverse sur le milieu contraint 3 une épaisseur de particules de polymère. Le support de têtes 7 balaye la surface du milieu contraint 3, en étant maintenu à la même altitude, la buse 5 restant alors dans le milieu contraint 3 mais étant inactive. En variante, la buse 5 peut-être extraite du milieu contraint. Le milieu contraint 3 présente ensuite un nouveau niveau N2, supérieur au niveau N1.

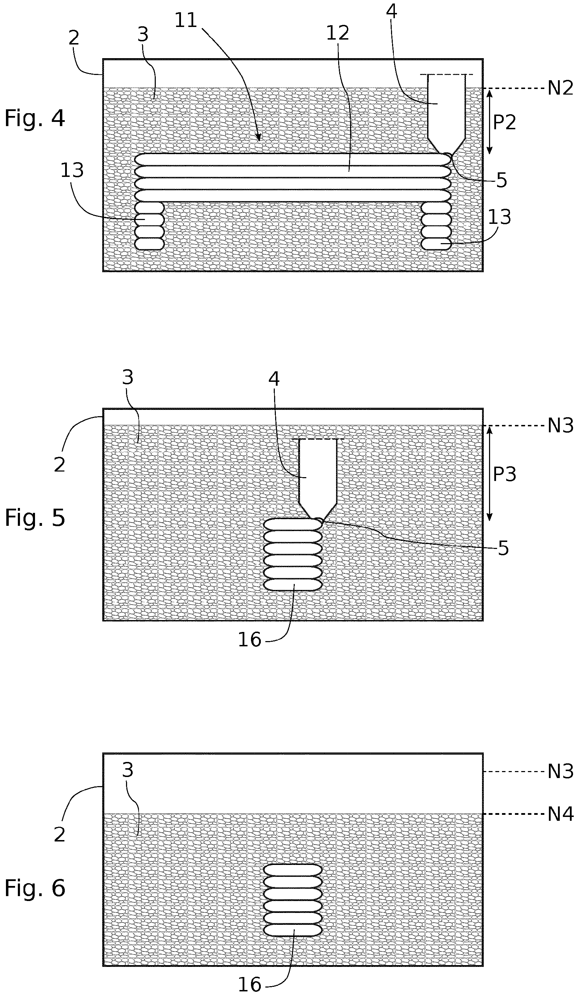

Une fois les montants latéraux 13 imprimés, la partie centrale 12 est à son tour imprimée, conformément à la figure 4, sous une profondeur d'impression P2, supérieure à la profondeur d'impression P1. Durant cette étape, la partie centrale 12 reste bien rectiligne et relie correctement les deux faces supérieures des montants latéraux 13.

Dans cet exemple, le niveau du milieu contraint 3 est augmenté pour obtenir une profondeur d'impression supérieure pour la partie centrale 12 que pour les montants latéraux 13. Une force de compression adaptée aux différentes portions de la pièce est ainsi présente au niveau de la buse 5.

L'exemple simplifié des figures 2 à 4 vise à décrire le mécanisme de base de l'augmentation du niveau du milieu contraint. Cette étape de diffusion permettant l'augmentation du niveau du milieu contraint 3 peut être mise en œuvre chaque fois qu'il est nécessaire de faire varier la pression hydrostatique dans une plage déterminée correspondant à une épaisseur d'impression, et ce autant de fois que nécessaire au cours de l'impression d'une pièce.

Les figures 5 à 7 illustrent une séquence d'impression 3D dans laquelle le niveau du milieu contraint 3 est réduit par l'intervention de la tête de retrait 10.

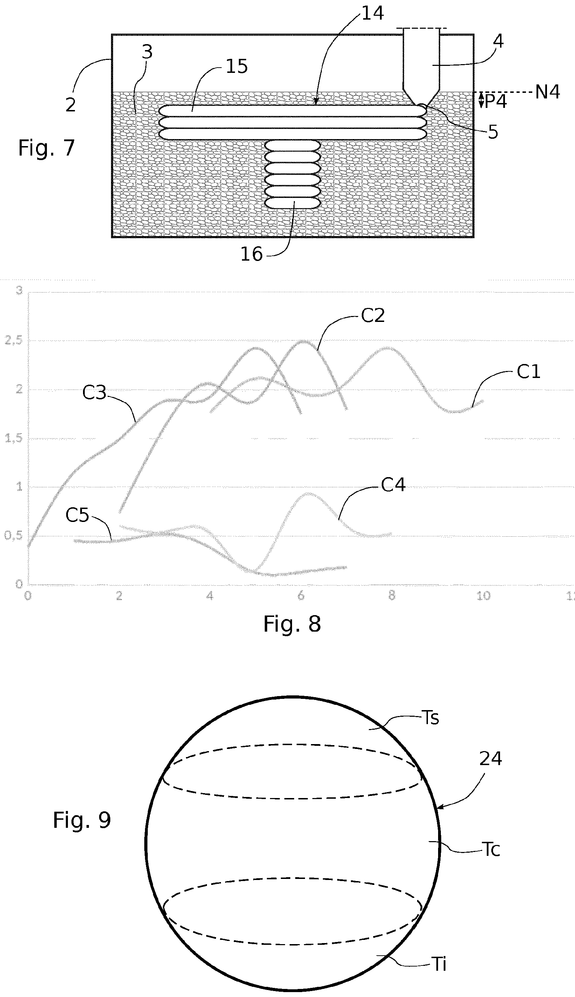

Dans cet exemple simplifié, la pièce 14 (voir figure 7) nécessite une force de compression au niveau de la buse 5 inférieure lors de l'impression de sa partie supérieure 15 que de sa base 16. Une force de compression trop importante peut en effet conduire certaines portions en porte-à-faux à se déformer.

La base 16 est tout d'abord imprimée, conformément à la figure 5, avec un niveau N3 du milieu contraint 3 correspondant à une profondeur d'impression P3.

Puis, comme illustré à la figure 6, une étape de retrait est réalisée par l'imprimante 3D en mode de retrait. La tête d'impression 4 est désactivée (c'est-à-dire que l'injection de matériau d'impression est interrompue) tandis que la tête de retrait 10 aspire la surface du milieu contraint 3 pour supprimer une partie du polymère pulvérisé et réduire le niveau du milieu contraint 3 à un niveau N4, inférieur au niveau N3.

Selon une étape suivante d'impression, illustrée à la figure 7, la partie supérieure 15 de la pièce 14 est imprimée selon une profondeur d'impression P4 qui est inférieure à l'épaisseur d'impression P3.

Le contrôle du niveau du milieu contraint 3 dans le bac 2 peut influer non seulement sur la qualité géométrique de réalisation des pièces, mais peut également agir sur les propriétés physiques de la pièce imprimée, telles que le module de Young, la contrainte ou déformation à la rupture, ou encore la capacité d'isolation thermique et/ou acoustique, mais aussi la conductivité ou permittivité électrique.

Pour chaque couple de matériau d'impression et de matériau contraignant formant le milieu contraint 3, l'influence du niveau du milieu contraint 3 sur une ou plusieurs propriétés physiques peut être établie. La figure 8 illustre cette question en représentant des courbes issues d'essais expérimentaux établissant la variation du module de Young en fonction du niveau du milieu contraint 3 dans le bac 2, et ce pour différents matériaux contraints constituant le milieu contraint. Les inventeurs ont réalisé ces courbes grâce à des essais à différentes profondeurs d'impression du même matériau d'impression (un silicone fluide) dans différents milieux contraints granulaires.

Sur le graphique de la figure 8 :
- la courbe C1 correspond à un milieu contraint constitué de silice ;
- la courbe C2 correspond à un milieu contraint constitué de sucre ;
- la courbe C3 correspond à un milieu contraint constitué de sable ;
- la courbe C4 correspond à un milieu contraint constitué d'un mélange de bicarbonate de soude et de silice ;
- la courbe C5 correspond à un milieu contraint constitué de PMMA pulvérisé.

Le graphique de la figure 8 montre que, pour certains milieux contraints, la variation du niveau dans le bac 2 a une grande influence sur le module de Young de la pièce finie (par exemple pour le sucre ou le sable comme milieu contraint). Une même forme de pièce peut donc présenter des modules de Young très différents en fonction des épaisseurs d'impression mises en œuvre dans le milieu contraint lors de son impression.

Un tel graphique expérimental peut être facilement réalisé pour tout couple « matériau du milieu contraint / matériau d'impression » par un opérateur disposant d'une imprimante 3D selon l'invention. Les profondeurs d'impression auxquelles il est préférable d'imprimer peuvent ainsi être déterminées pour une pièce particulière, dans un milieu contraint particulier, et avec un matériau d'impression particulier. Il est également possible de déterminer les variations du niveau de milieu contraint à mettre en œuvre pour modifier ou maintenir constante une propriété mécanique, telle que le module de Young, au sein de la pièce imprimée.

Une fois ce type de graphique établi, il est possible d'en tirer un abaque indiquant un niveau de milieu contraint à mettre en œuvre pour chaque séquence d'impression de la pièce.

Le niveau du milieu contraint 3 peut ainsi être contrôlé de sorte qu'une pièce ayant une certaine hauteur présente le même module de Young sur toute sa hauteur, le niveau du milieu contraint 3 étant donc ainsi modifié pour maintenir la même force de compression au niveau de la buse 5 de la tête d'impression 4.

À l'inverse, il est possible de modifier le niveau du milieu contraint 3 de sorte qu'une portion de la pièce présente un module de Young différent des autres portions. La figure 9 illustre un tel cas et représente une sphère 24 de silicone, imprimée selon l'invention, qui présente, en continuité de matière et d'épaisseur, un tronçon central Tc, un tronçon de calotte inférieure Ti, et un tronçon de calotte supérieure Ts. Dans cet exemple illustratif, le tronçon central Tc est souple (il possède donc un faible module de Young) tandis que les deux tronçons de calotte Ti, Ts sont plus rigides (ils possèdent un module de Young élevé).

Cette sphère sera imprimée dans un milieu contraint qui conduit à un module de Young pour la pièce qui est sensible à la profondeur d'impression (tel que le sable, par exemple, conformément aux données expérimentales du graphique de la figure 8). Le procédé d'obtention de la sphère 24 peut, dans cette optique, comporter :
- une première étape d'impression de la calotte inférieure Ti dans le milieu contraint à un premier niveau correspondant à une profondeur d'impression importante (par exemple 5 cm) et constante pour chacune des couches constituant la calotte inférieure Ti;
- une deuxième étape de retrait où le niveau du milieu contraint dans le bac est réduit à un deuxième niveau par l'action de la tête de retrait 10 ;
- une troisième étape d'impression du tronçon central Tc avec une profondeur d'impression réduite (par exemple 1 cm) et constante pour chacune des couches constituant le tronçon central Tc ;
- une quatrième étape de diffusion où le niveau du milieu contraint dans le bac est augmenté à un troisième niveau par l'action de la tête de diffusion 9 ;
- une cinquième étape d'impression de la calotte supérieure Ts à une profondeur d'impression égale à celle relative à la calotte inférieure T1 (5cm dans l'exemple), grâce à l'augmentation du niveau du milieu contraint, et constante pour chacune des couches constituant la calotte supérieure Tc.

Le procédé permet ainsi de moduler une caractéristique mécanique sur une pièce (le module de Young dans cet exemple) en pilotant le niveau du milieu contraint dans le bac, sans recourir à un changement de matière.

En variante, un milieu contraint différent peut être déposé par la tête de diffusion 9 durant les étapes de diffusion, de sorte que la variation du module de Young (ou toute caractéristique physique variable selon la profondeur d'impression) est obtenue non seulement par la variation de la profondeur d'impression, mais également par la variation de la nature du milieu contraint.

Globalement, le procédé selon l'invention peut être mis en œuvre avec une étape préliminaire de calibrage consistant à déterminer un abaque établissant la relation entre une caractéristique physique que l'on souhaite moduler (ou au contraire garantir la constance) et la profondeur d'impression ainsi que la nature du milieu contraint. À partir de cette étape de calibrage, une étape de sélection détermine les profondeurs d'impression correspondant à des valeurs prédéterminées de la caractéristique physique, souhaitées pour les différents tronçons de la pièce à imprimer. Des étapes subséquentes d'impression 3D peuvent ensuite être mises en œuvre en contrôlant le niveau du milieu contraint pour se placer dans les plages de profondeur d'impression déterminées à l'étape de sélection.

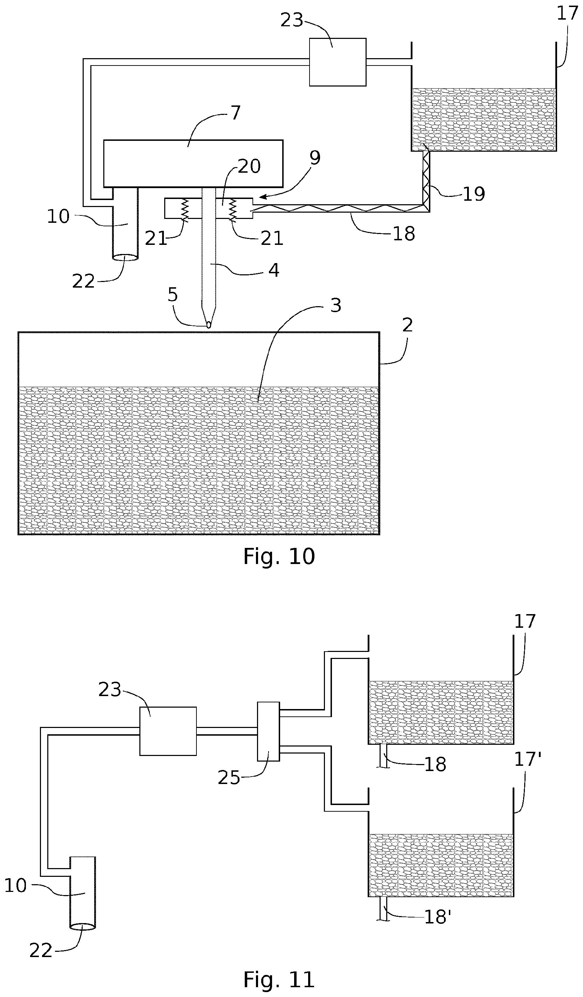

La figure 10 illustre plus en détails, schématiquement, les moyens techniques qui peuvent être mis en œuvre pour les têtes de diffusion 9 et de retrait 10.

Le dispositif d'impression 3D comporte un réservoir 17 contenant le même matériau qui constitue le milieu contraint 3. Ce réservoir 17 est relié par un conduit 18, muni d'une vis d'injection 19, à une couronne creuse 20 disposée autour de la tête d'impression 4 et constituant la tête de diffusion 9. La couronne 20 comporte des vis sans fin 21 permettant la distribution contrôlée du milieu contraint à partir de la couronne 20. Durant les étapes de diffusion, la vis d'injection 19 est activée et la diffusion du matériau contraignant contenu dans le réservoir 17 est contrôlé par les vis sans fin 21 tandis que la tête d'impression est pilotée pour parcourir la surface du milieu contraint 3.

La tête de retrait 10 est quant à elle formée d'une buse d'aspiration 22 reliée à des moyens d'aspiration 23 permettant le retrait d'une couche contrôlée de milieu contraint 3, et l'envoi du matériau contraignant prélevé vers le réservoir 17. La buse d'aspiration 22 peut être télescopique pour lui permettre de venir se placer à proximité de la surface du milieu contraint 3 dans le bac 2 pour procéder à l'aspiration.

Selon une variante illustrée à la figure 11, le dispositif comporte tous les éléments de la figure 10, et permet de plus d'ajouter des matériaux contraints de différentes natures au milieu contraint 3 grâce à plusieurs réservoirs (deux réservoirs 17 et 17' sont illustrés dans l'exemple, ces réservoirs 17, 17' étant reliés par un conduit 18, 18' à la tête de diffusion). Dans cette variante, un sélecteur de réservoir 25 peut être relié aux moyens d'aspiration 23 pour orienter le matériau contraignant prélevé vers le le réservoir 17, 17' qui contient le même matériau contraignant. Selon cette variante, la tête de diffusion comporte des moyens de sélection du matériau contraignant à déposer dans le bac 2, tandis que la tête de retrait comporte des moyens pour renvoyer sélectivement vers le bon réservoir le matériau contraignant aspiré.

Des variantes de réalisation du dispositif et du procédé selon l'invention peuvent être mises en œuvre sans sortir du cadre de l'invention. Notamment, le procédé peut être appliqué à tout procédé de fabrication additive dans lequel la buse, délivrant le matériau à imprimer, est déplacée au sein d'un milieu contraint selon les trois dimensions de l'espace, que ce milieu contraint soit gélifié ou pulvérisé et qu'il soit constitué d'un même matériau ou d'un mélange de divers matériaux.

Tout autre caractéristique physique, autre que le module de Young donné en exemple, peuvent faire l'objet d'un abaque pour déterminer sa variation sur la pièce finie, en fonction de la profondeur d'impression, lors du choix d'un couple « matériau imprimé / matériau du milieu contraint », tel que, par exemple, la contrainte de rupture, l'isolation thermique ou acoustique, la conductivité électrique, etc.

Comme cela vient d'être décrit, l'invention permet de moduler différentes propriétés physiques du matériau imprimé. De nombreuses variations peuvent ainsi être envisagées :
- Des variations de texture, par exemple pour améliorer les conditions de préhension (poignée, semelle, orthèse, modèle anatomique, etc.) ;
- Des variations des propriétés optiques (dispositif partiellement transparent, lentille, verre polarisant, etc.) ;
- Des variations de propriétés mécaniques (soufflets, ressorts, amortisseurs, etc.) ;
- Des variations des propriétés acoustiques (pièce d'isolation sonore, puits sonore, etc.) ;
- Des variations des propriétés thermiques (puits thermique, isolant thermique, etc.) ;
- Des variations de la porosité, etc.

Prises seules ou en combinaison, ces différentes variations rendues possibles par l'invention, dont la liste n'est pas exhaustive, permettent d'imprimer des objets qui peuvent avoir de nombreuses applications notamment dans les secteurs de la santé, de l'aéronautique, de l'automobile, du ferroviaire, de l'agroalimentaire, de l'agroalimentaire, du sport, du luxe, etc.

## Revendications

1. Procédé de fabrication additive incluant le dépôt d'un matériau d'impression en suspension au sein d'un bac d'impression (2) contenant un milieu contraint (3), pour former un objet tridimensionnel, ce dépôt de matériau d'impression étant réalisé par au moins une étape d'injection du matériau d'impression par une buse (5) de tête d'impression (4) plongée dans le milieu contraint (3) et mobile au sein du milieu contraint (3) selon les trois dimensions de l'espace, ce procédé étant **caractérisé en ce qu'**il comporte au moins une étape de modification du niveau du milieu contraint (3) dans le bac d'impression (2).

2. Procédé selon la revendication 1, **caractérisé en ce qu'**il comporte une étape d'ajustement de la contrainte exercée par le milieu contraint sur le matériau d'impression.

3. Procédé selon l'une des revendications précédentes, **caractérisé en ce que**, au cours d'une étape de modification du niveau du milieu contraint (3) dans le bac d'impression (2), une couche de matériau contraignant identique au matériau constituant le milieu contraint (3) dans le bac d'impression (2) est déposée à la surface du milieu contraint (3).

4. Procédé selon l'une des revendications précédentes, **caractérisé en ce que**, au cours d'une étape de modification du niveau du milieu contraint (3) dans le bac d'impression (2), une couche de matériau contraignant différent du matériau constituant le milieu contraint (3) dans le bac d'impression (2) est déposée à la surface du milieu contraint (3).

5. Procédé selon l'une des revendications 3 ou 4, **caractérisé en ce que** le dépôt d'une couche de matériau contraignant sur le milieu contraint (3) est réalisé par diffusion sur toute la surface du milieu contraint (3).

6. Procédé selon la revendication 5, **caractérisé en ce que** le dépôt d'une couche de matériau contraignant sur le milieu contraint (3) est réalisé par une tête de diffusion (9) mobile et **en ce que**, durant une étape de modification du niveau du milieu contraint (3) dans le bac d'impression (2), un support de têtes (7) portant la tête d'impression (4) et la tête de diffusion (9) est déplacé en vis-à-vis de toute la surface du milieu contraint (3), la tête d'impression (4) étant désactivée et la tête de diffusion (9) étant activée.

7. Procédé selon l'une des revendications précédentes, **caractérisé en ce que**, au cours d'une étape de modification du niveau du milieu contraint (3) dans le bac d'impression (2), une couche de matériau du milieu contraint (3) est extraite du bac d'impression (2).

8. Procédé selon la revendication 7, **caractérisé en ce que** l'extraction d'une couche de matériau du milieu contraint (3) est réalisée par aspiration sur toute la surface du milieu contraint (3).

9. Procédé selon l'une des revendications précédentes, **caractérisé en ce qu'**il comporte successivement :
- une étape d'impression d'une portion de l'objet tridimensionnel ;
- une étape de variation du niveau du milieu contraint (3) dans le bac d'impression (2) ;
- une étape d'impression d'une autre portion de l'objet tridimensionnel.

10. Procédé selon l'une des revendications précédentes, **caractérisé en ce qu'**il comporte :
- une étape préliminaire de calibrage dans laquelle est déterminée la relation entre une caractéristique physique prédéterminée et la profondeur d'impression dans le milieu contraint (3) ;
- une étape de sélection de profondeurs d'impression correspondant à des valeurs prédéterminées pour ladite caractéristique physique ;
- des étapes d'impression d'une pièce dans le milieu contraint, à des niveaux du milieu contraint correspondant aux profondeurs d'impression sélectionnées.

11. Procédé selon l'une des revendications précédentes, **caractérisé en ce que** le milieu contraint (3) est un milieu contraint granulaire qui est constitué d'une phase granulaire solide ainsi que d'une phase interstitielle gazeuse, la phase granulaire étant un amas d'éléments solides discrets, les éléments discrets interagissant les uns avec les autres en s'appuyant sur les zones de contacts que chaque élément discret présente avec les éléments discrets qui l'entourent.

12. Dispositif de fabrication additive comportant :
- un milieu contraint (3) disposé dans un bac d'impression (2) ;
- une tête d'impression (4) adaptée à délivrer un matériau d'impression, cette tête d'impression (4) comportant une buse (5) adaptée à être déplacée au sein du milieu contraint (3) selon les trois dimensions de l'espace ;
ce dispositif étant **caractérisé en ce qu'**il comporte :
- un dispositif de modification du niveau du milieu contraint (3) du bac d'impression (2).

13. Dispositif selon la revendication 12, **caractérisé en ce qu'**il comporte une tête de diffusion (9) mobile adaptée au dépôt d'une couche de matériau contraignant sur le milieu contraint (3) et comportant des moyens de distribution contrôlée (21) de matériau contraignant.

14. Dispositif selon la revendication 13, **caractérisé en ce qu'**il comporte un support de têtes (7) portant la tête d'impression (4) et la tête de diffusion (9), le support de tête (7) étant déplaçable en vis-à-vis de toute la surface du milieu contraint (3) selon un mode où la tête d'impression (4) est désactivée et la tête de diffusion (9) est activée.

15. Dispositif selon l'une des revendications 13 ou 14, **caractérisé en ce qu'**il comporte un réservoir (17) de matériau contraignant contenant un matériau identique au matériau constituant le milieu contraint (3) dans le bac d'impression (2), ce réservoir (17) alimentant la tête de diffusion (9).

16. Dispositif selon l'une des revendications 13 à 15, **caractérisé en ce qu'**il comporte un réservoir (17') de matériau contraignant contenant un matériau différent du matériau constituant le milieu contraint (3) dans le bac d'impression (2), ce réservoir (17) alimentant la tête de diffusion (9).

## Patentansprüche

1. Verfahren zur additiven Fertigung, umfassend das Aufbringen eines Druckmaterials in Suspension in einem Druckbehälter (2), der ein Stützmedium (3) enthält, um ein dreidimensionales Objekt zu formen, wobei dieses Aufbringen von Druckmaterial durch mindestens einen Schritt des Spritzens des Druckmaterials durch eine Düse (5) eines Druckkopfes (4) ausgeführt wird, der in das Stützmedium (3) eintaucht und in dem Stützmedium (3) in den drei räumlichen Dimensionen beweglich ist, wobei dieses Verfahren **dadurch gekennzeichnet ist, dass** es mindestens einen Schritt des Änderns des Niveaus des Stützmediums (3) in dem Druckbehälter (2) umfasst.

2. Verfahren nach Anspruch 1, **dadurch gekennzeichnet, dass** es einen Schritt des Anpassens der Stützung umfasst, die durch das Stützmedium auf das Druckmaterial ausgeübt wird.

3. Verfahren nach einem der vorhergehenden Ansprüche, **dadurch gekennzeichnet, dass** bei einem Schritt des Änderns des Niveaus des Stützmediums (3) in dem Druckbehälter (2) eine Schicht aus stützendem Material, das identisch mit dem Material ist, welches das Stützmedium (3) in dem Druckbehälter (2) bildet, auf die Oberfläche des Stützmediums (3) aufgebracht wird.

4. Verfahren nach einem der vorhergehenden Ansprüche, **dadurch gekennzeichnet, dass** bei einem Schritt des Änderns des Niveaus des Stützmediums (3) in dem Druckbehälter (2) eine Schicht aus stützendem Material, das verschieden von dem Material ist, welches das Stützmedium (3) in dem Druckbehälter (2) bildet, auf die Oberfläche des Stützmediums (3) aufgebracht wird.

5. Verfahren nach einem der Ansprüche 3 oder 4, **dadurch gekennzeichnet, dass** das Aufbringen einer Schicht aus stützendem Material auf das Stützmedium (3) durch Diffusion auf die gesamte Oberfläche des Stützmediums (3) ausgeführt wird.

6. Verfahren nach Anspruch 5, **dadurch gekennzeichnet, dass** das Aufbringen einer Schicht aus stützendem Material auf das Stützmedium (3) durch einen beweglichen Diffusionskopf (9) ausgeführt wird und dass während eines Schritts des Änderns des Niveaus des Stützmediums (3) in dem Druckbehälter (2) eine Kopfhalterung (7), die den Druckkopf (4) und den Diffusionskopf (9) trägt, gegenüber der gesamten Oberfläche des Stützmediums (3) bewegt wird, wobei der Druckkopf (4) deaktiviert ist und wobei der Diffusionskopf (9) aktiviert ist.

7. Verfahren nach einem der vorhergehenden Ansprüche, **dadurch gekennzeichnet, dass** bei einem Schritt des Änderns des Niveaus des Stützmediums (3) in dem Druckbehälter (2) eine Materialschicht des Stützmediums (3) aus dem Druckbehälter (2) entnommen wird.

8. Verfahren nach Anspruch 7, **dadurch gekennzeichnet, dass** das Entnehmen einer Materialschicht des Stützmediums (3) durch Absaugen auf der gesamten Oberfläche des Stützmediums (3) ausgeführt wird.

9. Verfahren nach einem der vorhergehenden Ansprüche, **dadurch gekennzeichnet, dass** es nacheinander umfasst:
- einen Schritt des Druckens eines Abschnitts des dreidimensionalen Objekts;
- einen Schritt das Variierens des Niveaus des Stützmediums (3) in dem Druckbehälter (2);
- einen Schritt des Druckens eines weiteren Abschnitts des dreidimensionalen Objekts.

10. Verfahren nach einem der vorhergehenden Ansprüche, **dadurch gekennzeichnet, dass** es umfasst:
- einen vorbereitenden Schritt des Kalibrierens, bei dem das Verhältnis zwischen einer vorbestimmten physikalischen Eigenschaft und der Drucktiefe in dem Stützmedium (3) bestimmt wird;
- einen Schritt des Auswählens von Drucktiefen, die vorbestimmten Werten für die physikalische Eigenschaft entsprechen;
- Schritte des Druckens eines Teils in dem Stützmedium auf Niveaus des Stützmediums, die den ausgewählten Drucktiefen entsprechen.

11. Verfahren nach einem der vorhergehenden Ansprüche, **dadurch gekennzeichnet, dass** das Stützmedium (3) ein körniges Stützmedium ist, das aus einer festen körnigen Phase und einer gasförmigen interstitiellen Phase gebildet wird, wobei die körnige Phase eine Ansammlung von diskreten festen Elementen ist, wobei die diskreten Elemente miteinander interagieren, indem sie sich an Kontaktbereichen abstützen, die jedes diskrete Element mit den es umgebenden diskreten Elementen aufweist.

12. Vorrichtung zur additiven Fertigung, umfassend:
- ein Stützmedium (3), das in einem Druckbehälter (2) angeordnet ist;
- einen Druckkopf (4), der geeignet ist, ein Druckmaterial abzugeben, wobei dieser Druckkopf (4) eine Düse (5) umfasst, die geeignet ist, in dem Stützmedium (3) in den drei räumlichen Dimensionen bewegt zu werden;
wobei diese Vorrichtung **dadurch gekennzeichnet ist, dass** sie umfasst:
- eine Vorrichtung zum Ändern des Niveaus des Stützmediums (3) des Druckbehälters (2).

13. Vorrichtung nach Anspruch 12, **dadurch gekennzeichnet, dass** sie einen beweglichen Diffusionskopf (9) umfasst, der zum Aufbringen einer Schicht aus stützendem Material auf das Stützmedium (3) geeignet ist und Mittel (21) zur kontrollierten Verteilung von stützendem Material umfasst.

14. Vorrichtung nach Anspruch 13, **dadurch gekennzeichnet, dass** sie eine Kopfhalterung (7) umfasst, die den Druckkopf (4) und den Diffusionskopf (9) trägt, wobei die Kopfhalterung (7) gegenüber der gesamten Oberfläche des Stützmediums (3) bewegbar ist gemäß einer Betriebsart, in welcher der Druckkopf (4) deaktiviert ist und der Diffusionskopf (9) aktiviert ist.

15. Vorrichtung nach einem der Ansprüche 13 oder 14, **dadurch gekennzeichnet, dass** sie ein Reservoir (17) für stützendes Material umfasst, das ein Material enthält, das mit dem Material identisch ist, welches das Stützmedium (3) in dem Druckbehälter (2) bildet, wobei dieses Reservoir (17) den Diffusionskopf (9) versorgt.

16. Vorrichtung nach einem der Ansprüche 13 bis 15, **dadurch gekennzeichnet, dass** sie ein Reservoir (17') für stützendes Material umfasst, das ein Material enthält, das verschieden von dem Material ist, welches das Stützmedium (3) in dem Druckbehälter (2) bildet, wobei dieses Reservoir (17) den Diffusionskopf (9) versorgt.

## Claims

1. Additive manufacturing method including the deposition of a printing material in suspension within a printing tray (2) containing a stressed medium (3) to form a three-dimensional object, this deposition of printing material being realized via at least one step of injecting printing material through a nozzle (5) of a printing head (4) that is dipped into the stressed medium (3) and can be moved within the stressed medium (3) in the three spatial dimensions, this method being **characterized in that** it has at least one step of modifying the level of the stressed medium (3) in the printing tray (2).

2. Method according to Claim 1, **characterized in that** it has a step of adjusting the stress exerted by the stressed medium on the printing material.

3. Method according to either of the preceding claims, **characterized in that**, during a step of modifying the level of the stressed medium (3) in the printing tray (2), a layer of constraining material identical to the material making up the stressed medium (3) in the printing tray (2) is deposited on the surface of the stressed medium (3).

4. Method according to one of the preceding claims, **characterized in that**, during a step of modifying the level of the stressed medium (3) in the printing tray (2), a layer of constraining material different from the material making up the stressed medium (3) in the printing tray (2) is deposited on the surface of the stressed medium (3).

5. Method according to either of Claims 3 and 4, **characterized in that** the deposition of a layer of constraining material on the stressed medium (3) is realized by diffusion over the entire surface of the stressed medium (3).

6. Method according to Claim 5, **characterized in that** the deposition of a layer of constraining material on the stressed medium (3) is realized by a movable diffusion head (9) and **in that**, during a step of modifying the level of the stressed medium (3) in the printing tray (2), a head support (7) bearing the printing head (4) and the diffusion head (9) is displaced facing the entire surface of the stressed medium (3), the printing head (4) being deactivated and the diffusion head (9) being activated.

7. Method according to one of the preceding claims, **characterized in that**, during a step of modifying the level of the stressed medium (3) in the printing tray (2), a layer of material of the stressed medium (3) is extracted from the printing tray (2).

8. Method according to Claim 7, **characterized in that** the extraction of a layer of material of the stressed medium (3) is realized by suction over the entire surface of the stressed medium (3).

9. Method according to one of the preceding claims, **characterized in that** it has the following successive steps:
- a step of printing a portion of the three-dimensional object;
- a step of varying the level of the stressed medium (3) in the printing tray (2);
- a step of printing another portion of the three-dimensional object.

10. Method according to one of the preceding claims, **characterized in that** it has the following steps:
- a preliminary calibration step, in which the relationship between a predetermined physical characteristic and the printing depth in the stressed medium (3) is determined;
- a step of selecting printing depths corresponding to predetermined values for said physical characteristic;
- steps of printing a part in the stressed medium, at levels of the stressed medium corresponding to the printing depths selected.

11. Method according to one of the preceding claims, **characterized in that** the stressed medium (3) is a granular stressed medium which is made up of a solid granular phase and a gaseous interstitial phase, the granular phase being a mass of discrete solid elements, the discrete elements interacting with one another by bearing against regions of contact between each discrete element and the discrete elements surrounding it.

12. Additive manufacturing device having:
- a stressed medium (3) disposed in a printing tray (2);
- a printing head (4) designed to dispense a printing material, this printing head (4) having a nozzle (5) designed to be displaced within the stressed medium (3) in the three spatial dimensions;
this device being **characterized in that** it has:
- a device for modifying the level of the stressed medium (3) of the printing tray (2).

13. Device according to Claim 12, **characterized in that** it has a movable diffusion head (9) designed to deposit a layer of constraining material on the stressed medium (3) and having controlled-distribution means (21) for the controlled distribution of constraining material.

14. Device according to Claim 13, **characterized in that** it has a head support (7) bearing the printing head (4) and the diffusion head (9), the head support (7) being displaceable facing the entire surface of the stressed medium (3) in a mode in which the printing head (4) is deactivated and the diffusion head (9) is activated.

15. Device according to either of Claims 13 and 14, **characterized in that** it has a reservoir (17) of constraining material containing a material identical to the material making up the stressed medium (3) in the printing tray (2), this reservoir (17) supplying the diffusion head (9).

16. Device according to one of Claims 13 to 15, **characterized in that** it has a reservoir (17') of constraining material containing a material different from the material making up the stressed medium (3) in the printing tray (2), this reservoir (17) supplying the diffusion head (9).
